# EUROPÄISCHE PATENTSCHRIFT

(11) **EP 2 352 633 B1**
(45) Veröffentlichungstag und Bekanntmachung des Hinweises auf die Patenterteilung: **26.12.2012**
(21) Anmeldenummer: 09740038.6
(22) Anmeldetag: 07.09.2009
(51) Int. Cl.: B29C 49/78

(54) **Verfahren und Vorrichtung zur Blasformung von Behältern**
Method and apparatus for blow-molding containers
Procédé et dispositif de moulage de contenants par soufflage

(30) Priorität: 13.11.2008 DE 102008057999
(43) Veröffentlichungstag der Anmeldung: 10.08.2011
(73) Patentinhaber: KHS Corpoplast GmbH, 22145 Hamburg (DE)
(72) Erfinder: HAESENDONCKX, Frank, 22395 Hamburg (DE); BALKAU, Karl-Heinz, 22113 Oststeinbek (DE); GERNHUBER, Matthias, 22527 Hamburg (DE)
(74) Vertreter: Hausfeld, Norbert
(86) Internationale Anmeldenummer: PCT/DE2009/001267
(87) Internationale Veröffentlichungsnummer: WO 2010/054610

(56) Entgegenhaltungen:
- WO-A1-02/087850
- WO-A1-2007/110018

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird, sowie bei dem im Anschluß an die Blasformung des Behälters auf mindestens einem Höhenniveau des Behälters eine Wanddicke gemessen wird und bei dem einer Regelung als Sollwert ein Vorgabewert für die Wandstärke und als Istwert die gemessene Wandstärke zugeführt wird, sowie bei dem von der Regelung eine Größe mindestens eines den Blasprozeß beeinflussenden Parameters in Abhängigkeit von einer Differenz zwischen dem Sollwert und dem Istwert vorgegeben wird.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und mindestens eine mit einer Blasform versehene Blasstation aufweist, sowie bei der eine Regelung verwendet ist, die mit mindestens einem Sensor zur Erfassung einer Wanddicke des Behälters verbunden ist, und bei dem die Regelung mindestens ein Stellglied zur Vorgabe der Größe eines den Blasprozeß beeinflussenden Parameters aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorform-linge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den Vorformlingen realisierten Wärmeverteilung dar.

Die Wärmeverteilung wird typischerweise derart realisiert, dass in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, dass Bereiche des Vorformlings mit einer geringeren Temperatur zu dickeren Wandungsbereichen des geblasenen Behälters führen und dass die wärmeren Bereiche des Vorformlings bei der Durchführung der Blasverformung stärker verstreckt werden und hierdurch zu dünneren Wandungsbereichen des geblasenen Behälters führen.

Die Temperatur im Bereich der Vorformlinge kann mit sogenannten Pyrometern gemessen werden. Eine meßtechnische Erfassung einer konkreten Wanddicke im Bereich der geblasenen Behälter kann mit sogenannten Wanddickensensoren erfolgen, die beispielsweise optisch oder unter Verwendung von Schallwellen arbeiten.

Weitere wesentliche Parameter zur Beeinflussung der Materialverteilung im geblasenen Behälter sind die Reckgeschwindigkeit, die zeitliche Zuordnung des Reckvorganges zur Blasgaszuführung sowie der zeitliche Druckverlauf bei der Expansion des Vorformlings zum Behälter. Insbesondere die Steuerung des tatsächlichen Blasdruckes erweist sich als schwierig, da zwischen einem Steuerventil zur Blasdruckvorgabe und dem zu expandierenden Vorformling einem Strömungsweg mit unterschiedlichen Leitungsquerschnitten und die Strömung beeinflussenden Drosseln liegt und darüber hinaus durch die Volumenvergrößerung des Vorformlings bei der Umformung in den Behälter eine Rückwirkung auf den sich einstellenden Druck hervorgerufen wird. Andererseits führt das Einfahren der Reckstange in den Vorformling zu einer Verminderung des verfügbaren Volumens. Darüber hinaus liegen vergleichsweise komplexe Wechselwirkungen zwischen den einzelnen Parametern vor, die die konkrete sich ergebende Materialverteilung im geblasenen Behälter beeinflussen.

Die Vielzahl der Parameter und die Wechselwirkungen zwischen den Parametern führen dazu, dass statt einer tatsächlichen Regelung häufig nur eine Steuerung unter Berücksichtigung empirisch ermittelter und manuell vorgegebener Einstellungen erfolgt. Konkret realisierte Regelungen beziehen sich typischerweise auf einzelne Parameter, ohne die Komplexität des Blasprozesses in ausreichender Weise zu berücksichtigen.

Aus der WO 2007/110018 A1 ist bereits ein Verfahren zur Blasformung von Behältern bekannt, bei dem ein Vorformling aus einem thermoplastischen Material nach einer thermischen Konditionierung entlang eines Transportweges im Bereich einer Heizstrecke innerhalb einer Blasform durch Blasdruckeinwirkung umgeformt wird. Es erfolgt eine Wanddickenmessung des Behälters und eine Regelung des Blasprozesses.

In der WO 02/087850 A1 wird eine Beheizung von Vorformlingen beschrieben, bei der auf die Vorformlinge sowohl eine Strahlungsheizung als auch eine Kühlluftströmung einwirken.

Aufgabe der vorliegenden Erfindung ist es, ein Verfahren der einleitend genannten Art derart zu verbessern, dass mit geringem maschinenbaulichen Aufwand eine qualitativ hochwertige Behälterformung bei gleichzeitig hohen Durchsatzraten unterstützt wird.

Diese Aufgabe wird erfindungsgemäß dadurch gelöst, dass die Größe mindestens eines die Blasgaszufuhr beeinflussenden Parameters von der Regelung als Stellgröße vorgegeben wird und dass die Vorgabe der Größe des Parameters basierend auf einem in der Regelung implementierten Simulationsmodell des Blasprozesses erfolgt.

Weitere Aufgabe der vorliegenden Erfindung ist es, eine Vorrichtung der einleitend genannten Art derart zu konstruieren, dass hohe Durchsatzraten bei einfachem konstruktiven Aufbau und guter Produktqualität unterstützt werden.

Diese Aufgabe wird erfindungsgemäß dadurch gelöst, dass das Stellglied zur Vorgabe der Größe eines die Blasgaszufuhr beeinflussenden Parameters ausgebildet ist und dass die Regelung ein Simulationsmodell des Blasprozesses zur Ermittlung der Größe des Parameters in Abhängigkeit von einer Regelabweichung zwischen dem Sollwert und dem Istwert umfaßt.

Die Regelung des Blasvorganges unter Berücksichtigung eines die Blasgaszufuhr beeinflussenden Parameters sowie bei Berücksichtigung der Wechselwirkungen einzelner Einflußfaktoren durch das Simulationsmodell des Blasprozesses ermöglicht eine qualitativ äußerst hochwerte Behälterproduktion, da vorgegebene Sollwerte mit geringen Toleranzen eingehalten werden und eine Ausregelung von Störeinflüssen mit geringer zeitverzögerung erfolgen kann. Das Simulationsmodell berücksichtigt insbesondere Strömungsquerschnitte und Strömungswiderstände im Bereich der Blasgaszufuhr, Wechselwirkungen zwischen dem sich einstellenden Druck, dem Volumenstrom an Blasgas sowie Volumenänderungen aufgrund der sich entwickelnden Behälterblase und der jeweiligen Positionierung der Reckstange sowie gegebener weiterer Einflußfaktoren, wie beispielsweise die Temperatur der Vorformlinge, die Temperaturverteilung in der Wandung der Vorformlinge sowie die Blasformtemperatur. Grundsätzlich ist es möglich, beliebige zusätzliche Einflußfaktoren mit in das Simulationsmodell des Blasvorganges mit einzubeziehen.

Eine hohe Konturtreue der geblasenen Behälter läßt sich dadurch erreichen, daß die Wanddickenmessung des Behälters auf mehreren unterschiedlichen Höhenniveaus durchgeführt wird.

Gemäß einer Ausführungsform ist vorgesehen, daß als Parameter ein Blasdruck geregelt wird.

Ebenfalls ist daran gedacht, daß als Parameter ein Volumenstrom geregelt wird.

Ergänzend ist es auch möglich, daß zusätzlich zu dem die Blasgaszufuhr beeinflussenden Parameter eine Heiztemperatur geregelt wird.

Vergrößerte Einflußmöglichkeiten werden dadurch bereitgestellt, daß die Heiztemperatur auf mindestens einer Abschnittslänge des Vorformlings geregelt wird.

Eine übersichtliche Systemstruktur wird dadurch unterstützt, daß die Regelung in Form einer Kaskadenregelung durchgeführt wird.

Insbesondere erweist es sich unter Berücksichtigung dynamischer Eigenschaften als zweckmäßig, daß in einem äußeren Regelkreis die Temperatur und in einem inneren Regelkreis der Blasgasparameter geregelt wird.

Ein adaptives Regelungskonzept wird dadurch unterstützt, daß vom Simulationsmodell des Blasprozesses auf die Regelcharakteristik mindestens eines Reglers eingewirkt wird.

Gemäß einer weiteren Realisierungsvariante ist auch daran gedacht, daß vom Simulationsmodell des Blasprozesses auf den Regelereingang mindestens eines Reglers eingewirkt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grund-sätzlichen Aufbaus einer Vorrichtung zur Blas-formung von Behältern,
- Fig. 4: eine modifizierte Heizstrecke mit vergrößerter Heizkapazität,
- Fig. 5: einen Querschnitt durch ein Heizelement mit einer Mehrzahl übereinander angeordneter Heizstrahler sowie einen zugeordneten Vorformling,
- Fig. 6: einen Querschnitt durch eine Sensoranordnung zur Messung von Wanddicken eines geblasenen Behälters,
- Fig. 7: eine Prinzipdarstellung einer Blasmaschine mit Heizstrecke, Blasrad, Pyrometer und Wanddickensensor und
- Fig. 8: eine schematische Darstellung eines Regelungskonzepts zur Regelung der Temperatur der Vorformlinge sowie zur Regelung der Wanddicke der geblasenen Behälter.

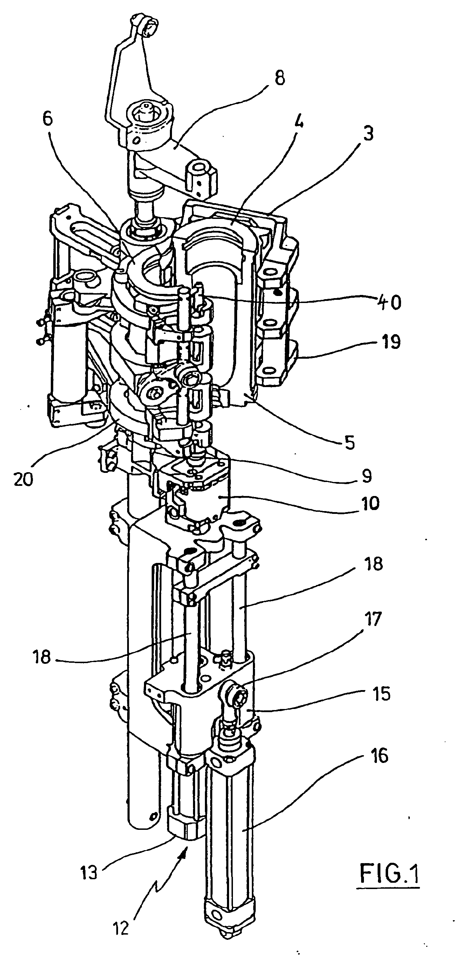

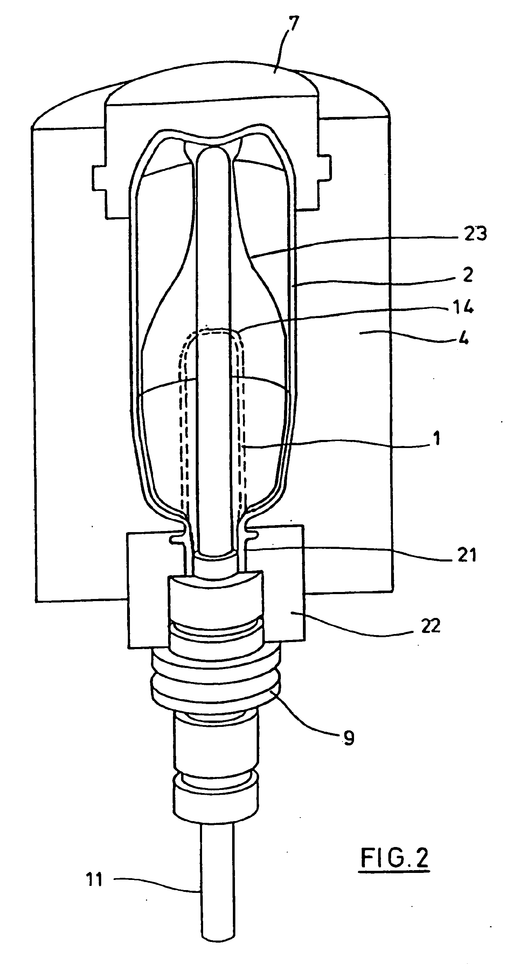

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt . Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsforzn wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

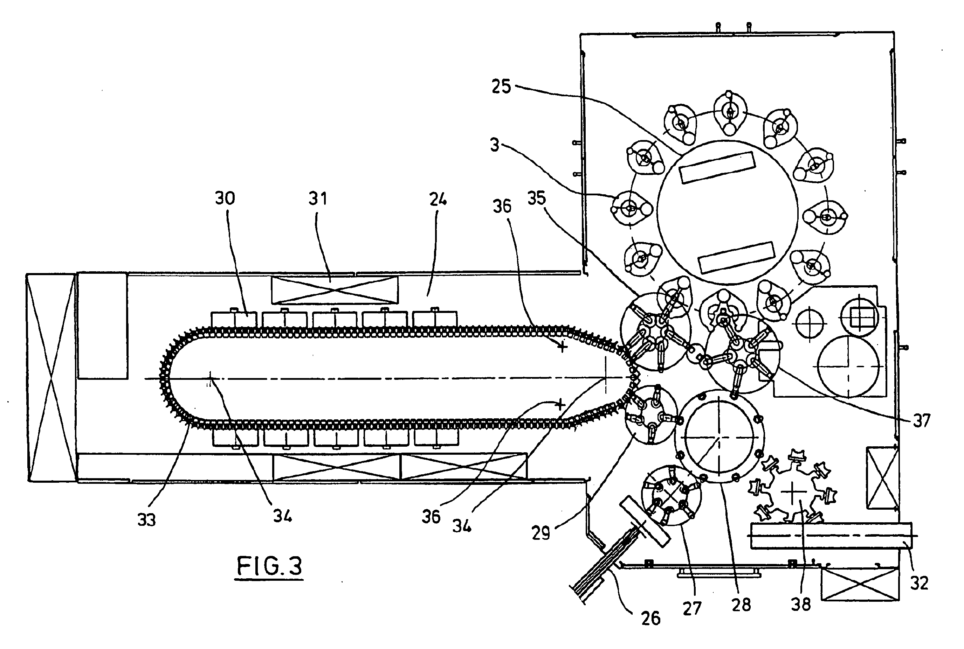

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

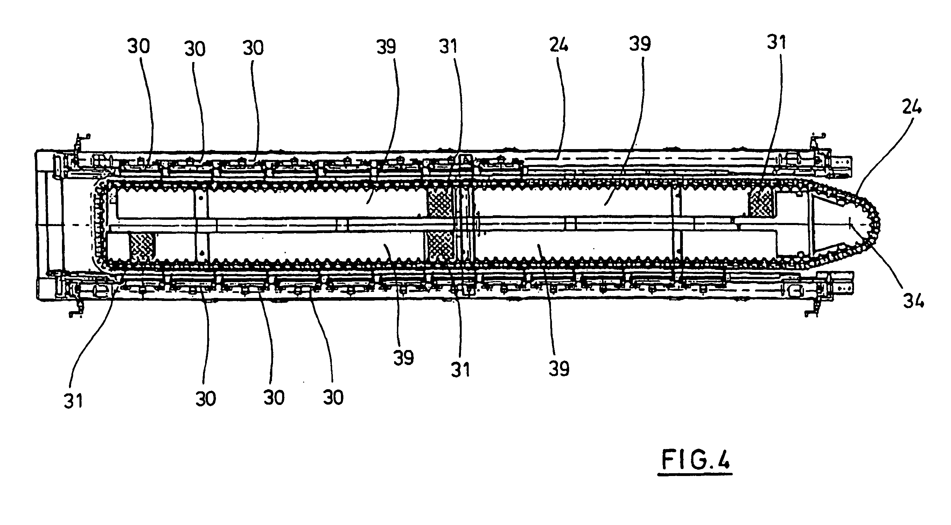

In der in Fig. 4 dargestellten modifizierten Heizstrecke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

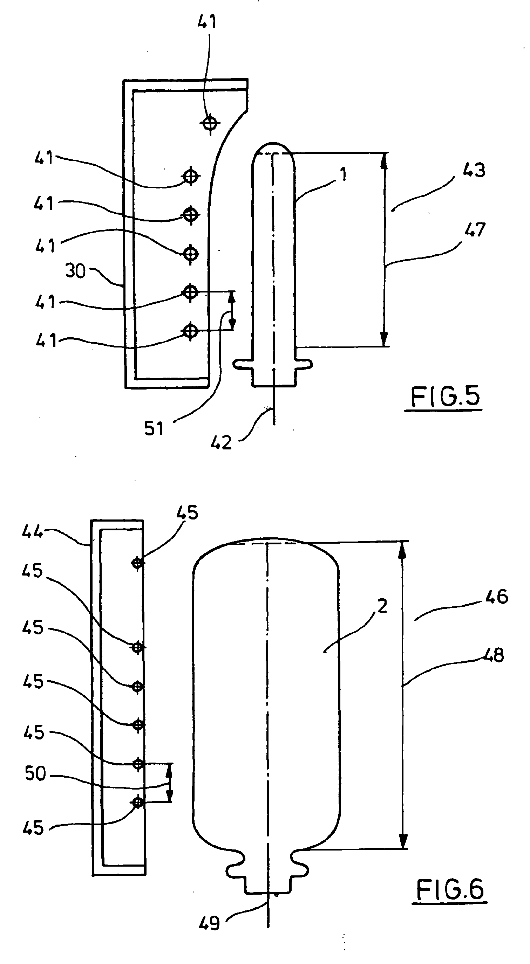

Fig. 5 zeigt eine schematische Darstellung eines Heizelementes (30), das mit einer Mehrzahl übereinander angeordneter Heizstrahler (41) versehen ist. Unter Verwendung der Heizstrahler (41) ist es möglich, in Richtung einer Längsachse (42) des Vorformlings (1) ein vorgegebenes Temperaturprofil zu erzeugen. Bei der Durchführung eines Reckvorganges wird im wesentlichen ein Streckbereich (43) des Vorformlings (1) einer biaxialen Orientierung unterworfen.

Fig. 6 zeigt eine schematische Darstellung einer Meßeinrichtung (44) mit einer Mehrzahl übereinander angeordneter Sensoren (45) zur Erfassung einer Wanddicke des Behälters (2). Der Streckbereich (43) des Vorformlings (1) wurde als Folge des Reck- und Blasvorganges in einen Orientierungsbereich (46) des Behälters (2) umgeformt. Der Streckbereich (43) des Vorformlings (1) weist eine Ausgangslänge (47) auf und der Orientierungsbereich (46) des Behälters (2) ist mit einer Produktlänge (48) versehen. Der Quotient aus der Produktlänge (48) und der Ausgangslänge (47) ergibt den realisierten Reckfaktor.

Der Behälter (2) weist eine Behälterlängsachse (49) auf, in deren Richtung hintereinander die Sensoren (45) angeordnet sind. Ein Sensorabstand (50) ergibt sich aus einem Heizstrahlerabstand (51) multipliziert mit dem Reckfaktor.

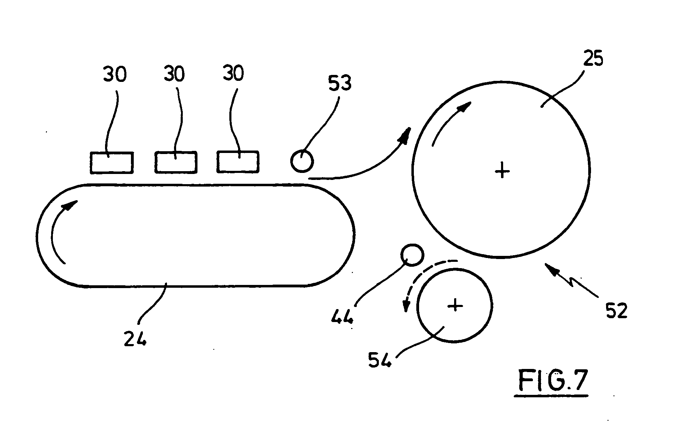

Fig. 7 zeigt eine schematische Darstellung einer Blasmaschine (52) in einer gegenüber der Darstellung in Fig. 3 stark vereinfachten und schematisierten Struktur. Es ist zu erkennen, daß ein Temperatursensor (53) zur Erfassung einer Temperatur der Vorformlinge (1) in einer Transportrichtung der Vorformlinge (1) im Bereich der Heizstrecke (24) hinter den Heizelementen (30) angeordnet ist. Vorteilhafterweise ist der Temperatursensor (53) möglichst dicht am Blasrad (25) angeordnet, um eine Temperaturerfassung nach einer Durchführung von thermischen Ausgleichsvorgängen innerhalb der wandung der Vorformlinge (1) zu ermöglichen. Als Temperatursensor (53) kann beispielsweise ein Pyrometer verwendet werden. Insbesondere ist es möglich, mehrere Temperatursensoren (53) in Richtung der Längsachse (42) der Vorformlinge (1) übereinander anzuordnen, um ein Temperaturprofil der Vorformlinge (1) zu erfassen. Als besonders vorteilhaft erweist es sich, eine Mehrzahl von Temperatursensoren (53) jeweils auf einem Höhenniveau der Heizstrahler (41) zu positionieren, um eine direkte Regelung der einzelnen Heizstrahler (41) durchführen zu können.

Dargestellt ist in Fig. 7 ebenfalls die Anordnung der Meßeinrichtung (44) zur Wanddickenerfassung der Behälter (2). Die Meßeinrichtung (44) kann beispielsweise im Bereich einer Entnahmeeinrichtung (54) angeordnet werden, die die geblasenen Behälter (2) aus dem Bereich des Blasrades (25) wegführt.

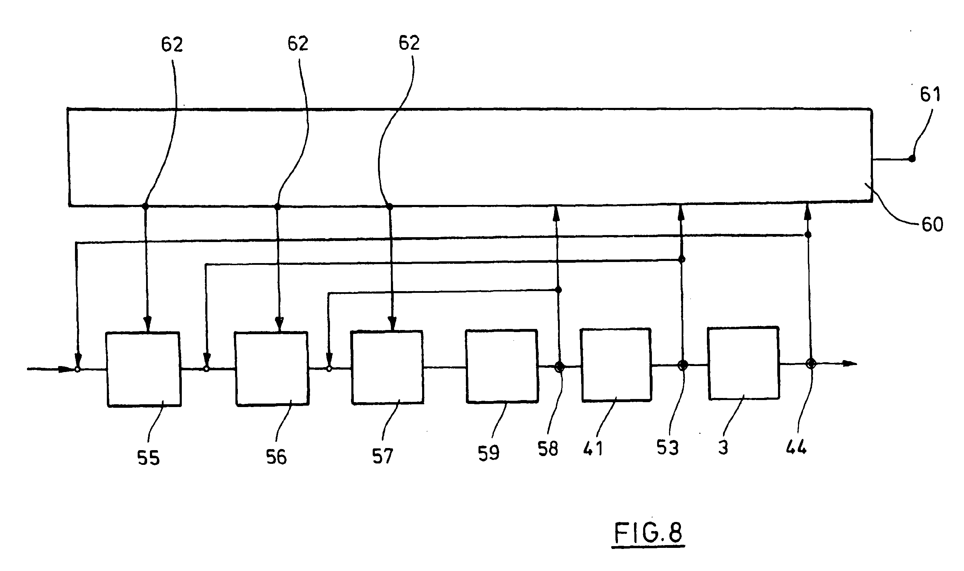

Fig. 8 zeigt eine schematische Darstellung eines Regelungssystems für die Heizelemente (30) bzw. die Heizstrahler (41) in einem äußeren Regelkreis sowie für einen oder mehrere die Blasgaszufuhr betreffende Parameter in einem inneren Regelkreis. Das Regelungssystem ist in Form einer Kaskadenregelung ausgebildet. Ein äußerer Regelkreis erfaßt hinter der Blasstation (3) über die Meßeinrichtung (44) die Wanddicke (2) des Behälters (2) auf mindestens einem vorgegebenen Höhenniveau und führt diesen Istwert dem Eingang eines Wanddickenreglers (55) zu. Unmittelbarer Eingangswert für den wanddickenregler (55) ist die Regeldifferenz zwischen einer vorgegebenen Wanddicke sowie der meßtechnisch erfaßten Wanddicke. Ein Ausgangswert des Wanddickenreglers (55) stellt den Sollwert für einen inneren Temperaturregelkreis bereit.

Einem Temperaturregler (56) wird als unmittelbarer Steuerwert die Differenz zwischen dem Ausgangswert des Wanddickenreglers (55) und einem vom Temperatursensor (53) erfaßten Temperaturwert des Vorformlings (1) auf einem vorgegebenen Höhenniveau zugeführt. Typischerweise wird jedem der Heizstrahler (41) eine in Fig. 8 dargestellte Regelungsstruktur zugeordnet.

Der innerste und somit schnellste Regelkreis der in Fig. 8 dargestellten Kaskadenregelung umfaßt einen oder mehrere Blasgasregler (57). Der Blasgasregler (57) kann zur Regelung beispielsweise eines Druckes und/oder eines Volumenflusses des Blasgases ausgebildet sein. Als Istwert wird dem Blasgasregler (57) eine Regeldifferenz zwischen einem von einem Sensor (58) bereitgestellten Istwert zum jeweils geregelten Blasgasparameter bereitgestellt, der sich als Ausgangswert einer zugeordneten Regelstrecke (59) ergibt.

Vorteilhafterweise ist mindestens einer der Regler (55, 56, 57) mit einem Integralverhalten ausgebildet, um Regeldifferenzen zu vermeiden. Gemäß einer weiteren Regelungsvariante berücksichtigt die Regelung ein Totzeitverhalten des Regelungssystems aufgrund der Transportweglängen der Vorformlinge (1) bzw. der Behälter (2). Es wird hierbei berücksichtigt, daß eine in Abhängigkeit von der Transportgeschwindigkeit bekannte Verzögerung zwischen einer Stellgrößenveränderung und einer Veränderung der Ausgangsgröße vorliegt.

Alternativ zu der in Fig. 8 dargestellten kaskadenartigen Realisierung des Regelungskonzeptes können auch beliebige andere Regelungsstrukturen realisiert werden. Bei kaskadenartigen Regelungsstrukturen erweist es sich als zweckmäßig, in den inneren Kreisen schnell veränderliche Prozeßparameter und in den äußeren Regelkreisen langsam veränderliche Prozeßparameter zu regeln.

Mindestens einer der von den Sensoren (44, 53, 58) gelieferten Meßwerte wird einem Prozeßmodell (60) zugeführt. Das Prozeßmodell (60) weist darüber hinaus einen oder mehrere Sensoreingänge (61) auf, um zusätzliche gemessene Informationen im Hinblick auf den Blasprozeß zu berücksichtigen. Das Prozeßmodell weist darüber hinaus einen oder mehrere Modellausgänge (62) auf, die eine Beeinflussung des Regelungsverhaltens ermöglichten. Gemäß einer Ausführungsvariante wird über den Modellausgang (62) die Regelcharakteristik mindestens eines der Regler (55, 56, 57) verändert. Gemäß einer weiteren Ausführungsvariante ist alternativ oder ergänzend auch daran gedacht, über den oder die Modellausgänge (62) den Eingangswert mindestens eines der Regler (55, 56, 57) zu beeinflussen. Diese Beeinflussung kann beispielsweise zusätzlich zu der von den Sensoren (44, 53, 58) hervorgerufenen Beeinflussung erfolgen. Ebenfalls ist es auch möglich, mindestens eines der Signale der Sensoren (44, 53, 58) durch einen am Modellausgang (62) verfügbaren Wert zu ersetzen. Das Prozeßmodell (60) bildet ein Simulationsmodell aus.

Das Prozeßmodell (60) ermöglicht es, bei der Durchführung der Regelung komplexe Zusammenhänge zwischen den einzelnen Prozeßparametern zu berücksichtigen. Es können insbesondere Verzögerungen, Totzeiten und Nichtlinearitäten berücksichtigt werden. Darüber hinaus ermöglicht es das Prozeßmodell (60) auch, in die Regelung Prozeßgrößen einzubeziehen, die sich einer unmittelbaren meßtechnischen Erfassung entziehen oder die nur mit einem hohen Aufwand meßtechnisch erfaßbar wären.

Die Regelung einer Behälterherstellung kann beispielsweise auf Basis eines vorgegebenen Druckverlaufes für den Blasdruck erfolgen. Werden bei einem vergleich der gemessenen Werte mit den vom Simulationsmodell generierten Werten Abweichungen bei mindestens einem der meßtechnisch erfaßten Parameter erkannt, so kann beispielsweise für jeden der Produktionszyklen der Startpunkt für die Zuführung des Vorblasdruckes geändert werden und/oder es ist möglich, die Geschwindigkeit des Reckvorganges in geeigneter Weise zu erhöhen oder zu erniedrigen. Dies kann insbesondere durch eine Vorgabe der jeweiligen Einfahrgeschwindigkeit der Reckstange in den zu reckenden Vorformling (1) hinein erfolgen.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter (2) umgeformt wird, sowie bei dem im Anschluß an die Blasformung des Behälters (2) auf mindestens einem Höhenniveau des Behälters (2) eine Wanddicke gemessen wird und bei dem einer Regelung als Sollwert ein Vorgabewert für die Wandstärke und als Istwert die gemessene Wanddicke zugeführt wird, sowie bei dem von der Regelung eine Größe mindestens eines den Blasprozeß beeinflussenden Parameters in Abhängigkeit von einer Differenz zwischen dem Sollwert und dem Istwert vorgegeben wird, **dadurch gekennzeichnet, dass** die Größe mindestens eines die Blasgaszufuhr beeinflussenden Parameters von der Regelung als Stellgröße vorgegeben wird und dass die Vorgabe der Größe des Parameters basierend auf einem in die Regelung implementierten Simulationsmodell des Blasprozesses erfolgt.

2. Verfahren nach Anspruch 1, **dadurch gekennzeichnet, dass** die Wanddickenmessung des Behälters (2) auf mehreren unterschiedlichen Höhenniveaus durchgeführt wird.

3. Verfahren nach Anspruch 1 oder 2, **dadurch gekennzeichnet, dass** als Parameter ein Blasdruck geregelt wird.

4. Verfahren nach Anspruch 1 oder 2, **dadurch gekennzeichnet, dass** als Parameter ein Volumenstrom geregelt wird.

5. Verfahren nach einem der Ansprüche 1 bis 4, **dadurch gekennzeichnet, dass** zusätzlich zu dem die Blasgaszufuhr beeinflussenden Parameter eine Heiztemperatur geregelt wird.

6. Verfahren nach Anspruch 5, **dadurch gekennzeichnet, dass** die Heiztemperatur auf mindestens einer Abschnittslänge des Vorformlings (1) geregelt wird.

7. Verfahren nach einem der Ansprüche 1 bis 6, **dadurch gekennzeichnet, dass** die Regelung in Form einer Kaskadenregelung durchgeführt wird.

8. Verfahren nach Anspruch 7, **dadurch gekennzeichnet, dass** in einem äußeren Regelkreis die Temperatur und in einem inneren Regelkreis der Blasgasparameter geregelt wird.

9. Verfahren nach einem der Ansprüche 1 bis 8, **dadurch gekennzeichnet, dass** vom Simulationsmodell des Blasprozesses auf die Regelcharakteristik mindestens eines Reglers eingewirkt wird.

10. Verfahren nach einem der Ansprüche 1 bis 8, **dadurch gekennzeichnet, dass** vom Simulationsmodell des Blasprozesses auf den Regelereingang mindestens eines Reglers eingewirkt wird.

11. Vorrichtung zur Blasformung von Behältern (2) aus einem thermoplastischen Material, die mindestens eine entlang eines Transportweges eines Vorformlings (1) angeordnete Heizstrecke (24) und mindestens eine mit einer Blasform (4) versehene Blasstation (3) aufweist, sowie bei der eine Regelung verwendet ist, die mit mindestens einem Sensor zur Erfassung einer Wanddicke des Behälters (2) verbunden ist, und bei dem die Regelung mindestens ein Stellglied zur Vorgabe der Größe eines den Blasprozeß beeinflussenden Parameters aufweist, **dadurch gekennzeichnet, dass** das Stellglied zur Vorgabe der Größe eines die Blasgaszufuhr beeinflussenden Parameters ausgebildet ist und dass die Regelung ein Simulationsmodell des Blasprozesses zur Ermittlung der Größe des Parameters in Abhängigkeit von einer Regelabweichung zwischen dem Sollwert und dem Istwert umfaßt.

12. Vorrichtung nach Anspruch 11, **dadurch gekennzeichnet, dass** mehrere Sensoren (45) auf relativ zueinander unterschiedlichen Höhenniveaus angeordnet sind.

13. Vorrichtung nach Anspruch 11 oder 12, **dadurch gekennzeichnet, dass** die Regelung zur Druckregelung ausgebildet ist.

14. Vorrichtung nach Anspruch 11 oder 12, **dadurch gekennzeichnet, dass** die Regelung zur Volumenstromregelung ausgebildet ist.

15. Vorrichtung nach einem der Ansprüche 11 bis 14, **dadurch gekennzeichnet, dass** zusätzlich zur Regelung des die Blasgaszufuhr beeinflussenden Parameters eine Heiztemperatur für die Vorformlinge (1) geregelt wird.

16. Vorrichtung nach Anspruch 15, **dadurch gekennzeichnet, dass** die Heizungsregelung zur Generierung eines sich in einer Längsrichtung des Vorformlings (1) erstreckenden Temperaturprofils ausgebildet ist.

17. Vorrichtung nach einem der Ansprüche 11 bis 16, **dadurch gekennzeichnet, dass** die Regelung als eine Kaskadenregelung ausgebildet ist.

18. Vorrichtung nach Anspruch 17, **dadurch gekennzeichnet, dass** die Kaskadenregelung einen inneren Regelkreis zur Regelung des Blasgaszufuhr beeinflussenden Parameters und einen äußeren Regelkreis zur Temperaturregelung bei der Beheizung der Vorformlinge (1) aufweist.

19. vorrichtung nach einem der Ansprüche 11 bis 18, **dadurch gekennzeichnet, dass** das Simulationsmodell mindestens einen Ausgang zur Beeinflussung mindestens einer Reglereigenschaft aufweist.

20. Vorrichtung nach einem der Ansprüche 11 bis 18, **dadurch gekennzeichnet, dass** das Simulationsmodell mindestens einen Ausgang zur Beeinflussung mindestens eines Reglereinganges aufweist.

## Claims

1. A process for blow moulding containers (2), in which a preform (1) made from a thermoplastic material is shaped into the container (2) within a blow mould (4) under the action of blowing pressure after thermal conditioning along a transport path in the region of a heating section (24), and in which a wall thickness is measured at at least one level of the container (2) following the blow moulding of the container (2), and in which a specified value for the wall thickness is supplied to a control as a set value and the measured wall thickness is supplied as an actual value, and in which a variable for at least one parameter influencing the blowing process is specified depending on a difference between the set value and the actual value, **characterised in that** the variable for at least one parameter influencing the supply of blowing gas is specified by the control as a control variable and **in that** the variable for the parameter is specified on the basis of a simulation model of the blowing process which is implemented in the control.

2. A process according to Claim 1, **characterised in that** the wall thickness of the container (2) is measured at a plurality of different levels.

3. A process according to Claim 1 or 2, **characterised in that** a blowing pressure is controlled as a parameter.

4. A process according to Claim 1 or 2, **characterised in that** a volume flow is controlled as a parameter.

5. A process according to one of Claims 1 to 4, **characterised in that** a heating temperature is controlled in addition to the parameter influencing the supply of blowing gas.

6. A process according to Claim 5, **characterised in that** the heating temperature is controlled along at least one section length of the preform (1).

7. A process according to one of Claims 1 to 6, **characterised in that** a cascade control is implemented as the control.

8. A process according to Claim 7, **characterised in that** the temperature is controlled in an outer control circuit and the blowing gas parameter is controlled in an inner control circuit.

9. A process according to one of Claims 1 to 8, **characterised in that** the simulation model of the blowing process influences the control characteristics of at least one control system.

10. A process according to one of Claims 1 to 8, **characterised in that** the simulation model of the blowing process influences the control input of at least one control system.

11. A device for blow moulding containers (2) made from a thermoplastic material, which has at least one heating section (24) arranged along a transport path of a preform (1) and at least one blowing station (3) provided with a blow mould (4), and in which a control is used which is connected to at least one sensor for detecting a wall thickness of the container (2) and in which the control has at least one control element for specifying the variable for a parameter influencing the blowing process, **characterised in that** the control element is designed to specify the variable for a parameter which influences the supply of blowing gas and **in that** the control comprises a simulation model of the blowing process for determining the variable for the parameter depending on a control deviation between the set value and the actual value.

12. A device according to Claim 11, **characterised in that** a plurality of sensors (45) are arranged at different levels relative to one another.

13. A device according to Claim 11 or 12, **characterised in that** the control is designed for pressure control.

14. A device according to Claim 11 or 12, **characterised in that** the control is designed for volume-flow control.

15. A device according to one of Claims 11 to 14, **characterised in that** a heating temperature for the preforms (1) is controlled in addition to controlling the parameter influencing the supply of blowing gas.

16. A device according to Claim 15, **characterised in that** the heating control is designed to generate a temperature profile extending in a longitudinal direction of the preform (1).

17. A device according to one of Claims 11 to 16, **characterised in that** the control is designed as a cascade control.

18. A device according to Claim 17, **characterised in that** the cascade control has an inner control circuit for controlling the parameter influencing the supply of blowing gas and an outer control circuit for temperature control when heating the preforms (1).

19. A device according to one of Claims 11 to 18, **characterised in that** the simulation model has at least one output for influencing at least one control characteristic.

20. A device according to one of Claims 11 to 18, **characterised in that** the simulation model has at least one output for influencing at least one control input.

## Revendications

1. Procédé servant au formage de récipients (2), par soufflage, dans lequel une préforme (1) composée d'une matière thermoplastique est, après un conditionnement thermique intervenant le long d'une trajectoire de transport située dans la zone d'une section de chauffage (24) placée à l'intérieur d'un moule de soufflage (4), façonnée sous l'effet de la pression de soufflage se produisant dans le récipient (2), procédé dans lequel, faisant suite au formage du récipient (2), par soufflage, une épaisseur de paroi est mesurée également sur au moins un niveau de hauteur du récipient (2), et procédé dans lequel sont fournies à une régulation, comme valeur théorique, une valeur prédéfinie pour l'épaisseur de paroi, et, comme valeur réelle, l'épaisseur de paroi mesurée, procédé dans lequel est prédéfinie également par la régulation, une variable d'au moins un paramètre influençant le processus de soufflage, en fonction d'une différence existant entre la valeur théorique et la valeur réelle,
**caractérisé en ce que** la variable d'au moins un paramètre influençant l'alimentation en gaz de soufflage est prédéfinie comme valeur réglante, par la régulation, et **en ce que** la prédéfinition de la variable du paramètre intervient en se basant sur un modèle de simulation du processus de soufflage, mis en oeuvre dans la régulation.

2. Procédé selon la revendication 1, **caractérisé en ce que** la mesure de l'épaisseur de paroi du récipient (2) est effectuée sur plusieurs niveaux de hauteur différents.

3. Procédé selon la revendication 1 ou 2, **caractérisé en ce qu'**une pression de soufflage est réglée comme paramètre.

4. Procédé selon la revendication 1 ou 2, **caractérisé en ce qu'**un débit volumétrique est réglé comme paramètre.

5. Procédé selon l'une quelconque des revendications 1 à 4, **caractérisé en ce qu'**une température de chauffage est réglée en plus du paramètre influençant l'alimentation en gaz de soufflage.

6. Procédé selon la revendication 5, **caractérisé en ce que** la température de chauffage est réglée sur au moins une longueur partielle de la préforme (1).

7. Procédé selon l'une quelconque des revendications 1 à 6, **caractérisé en ce que** la régulation est effectuée sous la forme d'une régulation en cascade.

8. Procédé selon la revendication 7, **caractérisé en ce que** la température est réglée dans un circuit de réglage extérieur, le paramètre de gaz de soufflage étant réglé dans un circuit de réglage intérieur.

9. Procédé selon l'une quelconque des revendications 1 à 8, **caractérisé en ce que** le modèle de simulation du processus de soufflage agit sur la caractéristique de réglage d'au moins un régulateur.

10. Procédé selon l'une quelconque des revendications 1 à 8, **caractérisé en ce que** le modèle de simulation du processus de soufflage agit sur l'entrée d'au moins un régulateur.

11. Dispositif servant au formage par soufflage de récipients (2) en matière thermoplastique, dispositif qui présente au moins une section de chauffage (24) disposée le long d'une trajectoire de transport d'une préforme (1) et au moins un poste de soufflage (3) doté d'un moule de soufflage (4), dispositif dans lequel est utilisée également une régulation qui est connectée au moins à un capteur servant à la détection d'une épaisseur de paroi du récipient (2), et dispositif dans lequel la régulation présente au moins un actionneur servant à prédéfinir la variable d'un paramètre influençant le processus de soufflage, **caractérisé en ce que** l'actionneur est conçu pour prédéfinir la variable d'un paramètre influençant l'alimentation en gaz de soufflage, et **en ce que** la régulation comprend un modèle de simulation du processus de soufflage servant au calcul de la variable du paramètre, en fonction d'un écart de réglage existant entre la valeur théorique et la valeur réelle.

12. Dispositif selon la revendication 11, **caractérisé en ce que** plusieurs capteurs (45) sont disposés à des niveaux de hauteur différents les uns par rapport aux autres.

13. Dispositif selon la revendication 11 ou 12, **caractérisé en ce que** la régulation est conçue pour servir à la régulation de la pression.

14. Dispositif selon la revendication 11 ou 12, **caractérisé en ce que** la régulation est conçue pour servir à la régulation du débit volumétrique.

15. Dispositif selon l'une quelconque des revendications 11 à 14, **caractérisé en ce qu'**une température de chauffage pour les préformes (1) est réglée en plus de la régulation du paramètre influençant l'alimentation en gaz de soufflage.

16. Dispositif selon la revendication 15, **caractérisé en ce que** la régulation du chauffage est conçue pour générer un profil de température s'étendant suivant une direction longitudinale de la préforme (1).

17. Dispositif selon l'une quelconque des revendications 11 à 16, **caractérisé en ce que** la régulation est conçue comme une régulation en cascade.

18. Dispositif selon la revendication 17, **caractérisé en ce que** la régulation en cascade présente un circuit de réglage intérieur servant à la régulation du paramètre influençant l'alimentation en gaz de soufflage et un circuit de réglage extérieur servant à la régulation de la température au cours du chauffage des préformes (1).

19. Dispositif selon l'une quelconque des revendications 11 à 18, **caractérisé en ce que** le modèle de simulation présente au moins une sortie servant à influencer au moins une propriété du régulateur.

20. Dispositif selon l'une quelconque des revendications 11 à 18, **caractérisé en ce que** le modèle de simulation présente au moins une sortie servant à influencer au moins une entrée du régulateur.
